# EUROPEAN PATENT APPLICATION

(11) **EP 2 302 208 A1**
(43) Date of publication of application: **30.03.2011**
(21) Application number: 09012115.3
(22) Date of filing: 23.09.2009
(51) Int. Cl.: F03D 7/02, F03D 7/04

(54) **Dynamic adaptation of a set point for a fatigue life of a structural component of a power generating machine**

(71) Applicant: Siemens Aktiengesellschaft, 80333 München (DE)
(72) Inventor: Egedal, Per, 7400 Herning (DK); Frydendal, Ib, 6683 Føvling (DK)

(57) **Abstract**

It is described a method for controlling the operation of a power generating machine (100). The method comprises (a) measuring a current mechanical load which is acting on a structural component (114, 120, 122) of the power generating machine, (b) estimating a new accumulated fatigue life time consumption of the structural component based on the measured current mechanical load and on a previously estimated accumulated fatigue life time consumption, (c) determining a set point for a fatigue life time consumption of the structural component based on the estimated new accumulated fatigue life time consumption and on at least one parameter being relevant for operating the power generating machine in the future and (d) operating the power generating machine in such a manner that the set point for the fatigue life time consumption of the structural component is achieved at least approximately. It is further described a machine load control system (150, 250), the power generating machine and a computer program, which are all adapted for carrying out the above described operation control method.

## Description

### Field of invention

The present invention relates to the technical field of operating power generating machines such as wind turbines. In particular, the present invention relates to a control method and to machine load control system for controlling the operation of a power generating machine in such a manner that an appropriate fatigue life time consumption of a structural component of the power generating machine can be realized. Further, the present invention relates to a power generating machine such as a wind turbine and to a computer program, which are adapted for carrying out the above mentioned operation control method.

### Art Background

Rotor blades of wind turbine are exposed to large dynamic mechanical loads in particular when the wind turbine is operated in turbulent wind conditions or in conditions of flow distortion, e.g. high wind shear. Therefore, the rotor blades of wind turbine and the corresponding supporting structures have been dimensioned such as to be able to withstand all the dynamic loads that could occur under all conditions to which the wind turbine is certified.

However, in case of extreme wing conditions the wind load on the wind turbine must be reduced in order to avoid any damage of the wind turbine. An existing measure by which the wind load on wind turbine is reduced in high wind conditions is simply shutting down the wind turbine when the wind speed exceeds one or more threshold values. Thus a wind turbine is e.g. shut down, when the wind speed exceeds the value of about 25 m/s for about 10 minutes, when the wind speed exceeds the value of about 28 m/s for about 30 seconds or when the wind speed exceeds the value of about 32 m/s for about 1 second.

In recent years it has become clear that continuing the strategy of simply strengthening the mechanical structure of a wind turbine in a sufficient manner would lead to very heavy designs in particular for large wind turbines. Consequently, various methods have been developed for the active reduction of operational loads acting on structural components such as rotor blades.

US 4,298,313 discloses a method for actively reducing the operational loads acting on rotor blades. The disclosed method is called cyclic blade pitch. In the cyclic blade pitch the blade pitch angle setting of each rotor blade is changed during each revolution. More recently, active flap regulation has been described where aerodynamic properties of the blade profiles are changed instead of the blade pitch.

EP 1 988 284 A1 discloses a method of operating a wind turbine, wherein for a reduction of a wind load impacting on the wind turbine the rotational speed of the rotor and/or the electrical power output of the wind turbine are reduced depending on a deviation of the wind speed from the average wind speed.

EP 2 000 667 A1 discloses a control method for controlling load reduction for a wind turbine rotor with rotor blades comprising at least one aerodynamic active element responsive to a control signal for modifying its setting is provided. The method comprises the steps of (a) detecting the loads acting on the rotor blades in relation to the rotor's azimuth, (b) establishing individual control signals for modifying the settings of the aerodynamic active elements of the rotor blades based on a pitch angle control system and (c) providing the aerodynamic active elements with the individual control signals.

It is further known to supply wind turbines with a load control which is capable of assuring that a consumed fatigue lifetime of a structural component is always kept below the real time i.e. the turbine calendar age. This means that the set point for the fatigue life time consumption of the structural component is the real (calendar) time. However, this approach has the drawback that the turbine may be saving its structure even then when there is a high demand for electrical power which in principle could be generated by the turbine at the expense of a temporarily increased fatigue. In this context "saving its structure" means that the structural component(s) of the turbine is(are) treated with care or in a preserving manner.

There may be a need for providing a flexible control procedure for the operation of a power generating machine, which procedure is capable of taking into account different input parameters for realizing an efficient operation with respect to the fatigue life time consumption of at least one structural component of the power generating machine.

### Summary of the Invention

This need may be met by the subject matter according to the independent claims. Advantageous embodiments of the present invention are described by the dependent claims.

According to a first aspect of the invention there is provided a method for controlling the operation of a power generating machine, in particular for controlling the operation of a wind turbine. The provided method comprises (a) measuring a current mechanical load which is acting on a structural component of the power generating machine, (b) estimating a new accumulated fatigue life time consumption of the structural component based on (b1) the measured current mechanical load and (b2) a previously estimated accumulated fatigue life time consumption, (c) determining a set point for a fatigue life time consumption of the structural component based on (c1) the estimated new accumulated fatigue life time consumption and (c2) at least one parameter being relevant for operating the power generating machine in the future and (d) operating the power generating machine in such a manner that the set point for the fatigue life time consumption of the structural component is achieved at least approximately.

The described method is based on the idea that the power generating machine is operated in such a manner that an appropriate fatigue life time is achieved. Thereby, the set point for the fatigue life is dynamically adapted to the condition of the structural component, which during its previous operation has suffered from a certain amount of fatigue consumption. According to the described control method the fatigue time, which the structural component has accumulated so far, is estimated by repeatedly performing mechanical load measurements. In response to the dynamic adaptation of the set point the operation of the power generating machine may be dynamically adapted or varied.

The load measurement and the corresponding update procedures for the accumulated fatigue life time consumption of the structural component can be accomplished periodically for stance with a repetition rate of 1 Hz. Thereby, a quasi continuous monitoring of the mechanical load acting on the structural component can be achieved. Of course, the described method can be carried also with other repetition rates or with non periodic accomplished measurement procedures.

In this document the terms "fatigue life time consumption" and "accumulated fatigue life time consumption" are related to the generally known term "fatigue life", which according to the American Society for Testing and Materials (ASTM) is defined as the number of stress cycles of a specified character that a structural component sustains before a failure of the structural component of a specified nature occurs. In this document the term "fatigue life" is also referred to as "fatigue life time".

Specifically, in this document the term "accumulated fatigue life time consumption" may be the fatigue life time, which the structural component has consumed so far since it has been put into operation. The higher the accumulated fatigue life time consumption is, the higher is the probability that a failure of the structural component will occur in the near future. Therefore, an accumulated fatigue life time consumption is indicative for the aging or deterioration of the structural component due to the mechanical loads acting on the structural component during its operation.

Further, in this document the term "fatigue life time consumption" is indicative for the remaining fatigue life time or for the total fatigue life time of the structural component. Thereby, the total fatigue life is the sum of (a) the accumulated fatigue life time consumption and (b) the remaining fatigue life time of the structural component.

The structural component may be any element of the power generating machine, which is subjected to mechanical loads. Preferably, the structural component is an element, which limits the lifetime of the power generating machine and/or which undergoes a comparatively strong deterioration. In this context the set point for the fatigue life time consumption may be the time (a) when the power generating machine has reached its end of life or (b) when the respective structural component has to be replaced with a new one.

It is mentioned that the described method can also be carried out in connection with two or even more structural components, wherein for each of these structural components the mechanical load is measured, a corresponding accumulated fatigue life time consumption is estimated and an appropriate set point for the fatigue life time consumption is determined. For operating the power generating machine all the determined set points may be taken into account. However, preferably, the smallest set point, i.e. the set point which is achieved at the earliest, is taken into account for operating the power generating machine.

The described adaptive operation of the power generating machine can be realized with different measures. However, all measures may have in common that an operational state resulting in a larger power generation will cause more mechanical stress or load to the structural component. Therefore, in order to achieve a set point which is timely located in the far future, the power generating machine should be operated in such a manner that a comparatively small amount of power is generated. By contrast thereto, in order to achieve a set point which is timely located very close, the power generation machine can be operated in such a manner that a comparatively large amount of power is generated. Of course, depending on the specific type of power generating machine appropriate measures for adapting the power generation will be known by a skilled person.

According to an embodiment of the invention the at least one parameter being relevant for operating the power generating machine in the future is (a) a scheduled fatigue life time consumption of the structural component, (b) a current fatigue life time consumption of the structural component being spent for generating a predefined amount of energy and/or (c) a remaining fatigue life time of the structural component. Thereby, the scheduled fatigue life time consumption may be the fatigue life time which is usually consumed during a normal operation of the power generating machine.

The current fatigue life time consumption of the structural component being spent for generating a predefined amount of energy may be for instance the current fatigue life time consumption per kWh being produced by the power generation machine.

The remaining fatigue life time consumption of the structural component may be the fatigue life time of the structural component, which when it has been consumed a failure of the structural component is expected.

In this respect it is mentioned that also further parameter(s) being relevant for operating the power generating machine in the future can be taken into account for determining an appropriate set-point for the fatigue life time consumption of the structural component. Such parameters may be for instance (a) the current price which can be achieved for the generated power (power price), (b) the current interest rate for a credit which has been used for financing the power generating machine and/or (c) the current principal for financing the power generating machine. Of course also other parameters may be taken into account for a proper set point determination.

With respect to a possible dependency of the operation strategy of the power generating machine from the current power price the following consideration might be taken into account. When the power price is comparatively low it might be advantageous to run the power generating machine in a conservative manner in order to reduce the mechanical loads on the structural component. By contrast thereto, if the power price has increased the power generating machine may be operated in a more aggressive manner leading to an enhanced power generation. Similar considerations might be made with respect to possible variations of current interest rate, which has to be paid for investments which might have been necessary for financing the power generating machine.

With respect to a possible dependency of the operation strategy of the power generating machine from the current principal it might happen that the principal is interested to have in the beginning of the operation of the power generating machine an increased request for taking benefit of his investments. This may mean that the machine will have to be operated in the beginning of its lifetime in a comparatively aggressive manner. In other words, the fatigue life time consumption and/or the fatigue life time consumption rate of the structural component may be higher in the first part if the life time of the power generating machine in order to bring down the principal of the machine financing.

Generally speaking, the power generating machine profit performance may be dynamically optimized based on all known financial parameters, on the condition of the structural component and/or on the current power potential and the current life time consumption.

According to a further embodiment of the invention the current mechanical load which is acting on the structural component is measured by a hard sensor.

In this respect a hard sensor may be any measuring instrument being capable of detecting a physical parameter of the structural component during the operation of the power generating machine. The hard sensor may be for instance a force meter, a pressure gauge, a strain gauge such as for instance a tensometer, an acceleration sensor, a proximity gauge, a displacement sensor and/or a temperature sensor. Thereby, a temperature sensor or preferably two temperature sensors may be used to determine thermal fluctuations and/or thermal gradients, which, because of a typical thermal expansion of the material of the structural component, may also cause a stress induced mechanical load on the structural component.

According to a further embodiment of the invention the current mechanical load which is acting on the structural component is measured by a soft sensor.

In this respect a soft sensor, which is often also called a virtual sensor, is a common name for software where several measurements are processed together. There may be dozens or even hundreds of measurements. The interaction of the signals being provided by one or more hard sensors can be used for calculating new quantities that need not be measured. Soft sensors may be especially useful in data fusion, where measurements of different characteristics and dynamics are combined.

According to a further embodiment of the invention the power generating machine is a wind turbine and operating the power generating machine in such a manner that the set point for the fatigue life time consumption of the structural component is achieved at least approximately comprises at least one of the following control measures: (a) stopping the operation of the wind turbine for a predetermined period of time, (b) reducing the speed of the wind turbine, (c) reducing the power being generated by the wind turbine, (d) changing the blade pitch angle of at least one rotor blade of the wind turbine, (e) changing the yaw angle of a nacelle of the wind turbine. Thereby, reducing speed of the wind turbine may particularly mean to reduce the rotational speed of the rotor of the wind turbine.

It is pointed out that the mentioned list of control measures is not exclusive. In order to change the current mechanical load a suitable adaptation of any arbitrary parameter of the wind turbine may be carried out, wherein the parameter adaptation results in a change of the current power generation of the wind turbine.

According to a further aspect of the invention there is provided a machine load control system for controlling the operation of a power generating machine, in particular for controlling the operation of a wind turbine. The machine load control system comprises (a) a receiving unit for receiving a measurement value being indicative for a current mechanical load which is acting on a structural component of the power generating machine, (b) an estimation unit for estimating a new accumulated fatigue life time consumption of the structural component based on (b1) the measured current mechanical load and (b2) a previously estimated accumulated fatigue life time consumption, (c) a processing unit for determining a set point for a fatigue life time consumption of the structural component based on (c1) the estimated new accumulated fatigue life time consumption and (c2) at least one parameter being relevant for operating the power generating machine in the future and (d) a control unit for operating the power generating machine in such a manner that the set point for the fatigue life time consumption of the structural component is achieved at least approximately.

Also the described machine load control system is based on the idea that by dynamically adapting the set point for the fatigue life of the structural component the power generating machine will be operated in such a manner that an appropriate fatigue life time of the structural component is achieved. Thereby, it is taken into account the amount of fatigue life time consumption, which the structural component has accumulated so far. This fatigue, which the structural component has accumulated so far, is estimated by repeatedly performing mechanical load measurements. As a consequence of the dynamic adaptation of the set point of course also the operation of the power generating machine may be dynamically adapted or varied.

Depending on the type of power generating machine different measures may be used for increasing or reducing the forthcoming fatigue of the structural component. In this respect it is clear that the forthcoming fatigue is correlated with the forthcoming mechanical load acting on the structural component. In order to reduce the forthcoming fatigue / mechanical load the power generating machine typically has to be operated in such a manner that a reduced power is generated. Correspondingly, in order to increase the forthcoming fatigue / mechanical load of the structural component the power generating machine typically has to be operated in such a manner that an increased amount of power is generated. A person skilled for operating the respective power generating machine will know appropriate measures for operating the power generating machine appropriately.

According to a further aspect of the invention there is provided a power generating machine, which comprises a machine load control system as set forth in the preceding claim.

The power generating machine may be a constituent of a thermal power station such as for instance a steam power station. In this context the constituent may be in particular a gas turbine and/or a steam turbine.

The Power generating machine may also be a constituent of a hydroelectric power station. In this case the constituent may be a turbine having turbine blades, which are acted upon by flowing water being produced for instance by hydroelectric dams or tidal forces.

According to a further aspect of the invention there is provided a wind turbine, which comprises a machine load control system as described above.

According to a further embodiment of the invention the structural component is a force, a stress and/or a pressure receiving element of a wind turbine.

The structural component may be for instance a rotor blade, a tower or a nacelle. Further, the structural component may be a part of the rotor of the wind turbine. In particular the structural component may a hub, which represents an anchor point for the rotor blades at the main shaft of the rotor, or a pitch bearing, which is located between a rotor blade and the hub. Further, the structural component may be the main shaft, a main bearing for the main shaft or a bed plate of the main bearing. Furthermore, the structural component may be a yaw bearing of the nacelle. Last but not least the structural component may be the gear box of the wind turbine or the electric generator of the wind turbine which is connected with the gear box.

This may provide the advantage that the above described operation of the wind turbine can be optimized in order to realize an optimized fatigue life time consumption of those components of a wind turbine, which usually undergoes the strongest mechanical loads /fatigue and which therefore limits the economic life-time or at least the maintenance interval of the wind turbine.

According to a further aspect of the invention there is provided a computer program for controlling the operation of a power generating machine, in particular for controlling the operation of a wind turbine. The computer program, when being executed by a data processor, is adapted for controlling the above described method for controlling the operation of a power generating machine.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a wind turbine according to an embodiment of the present invention.
Figure 2 shows in accordance with an embodiment of the present invention a block diagram of a wind turbine load control system and both an associated fatigue sensing system and an associated executing system.

### Detailed Description

The illustration in the drawing is schematically. It is noted that in different figures, similar or identical elements are provided with the same reference signs or with reference signs, which are different from the corresponding reference signs only within the first digit.

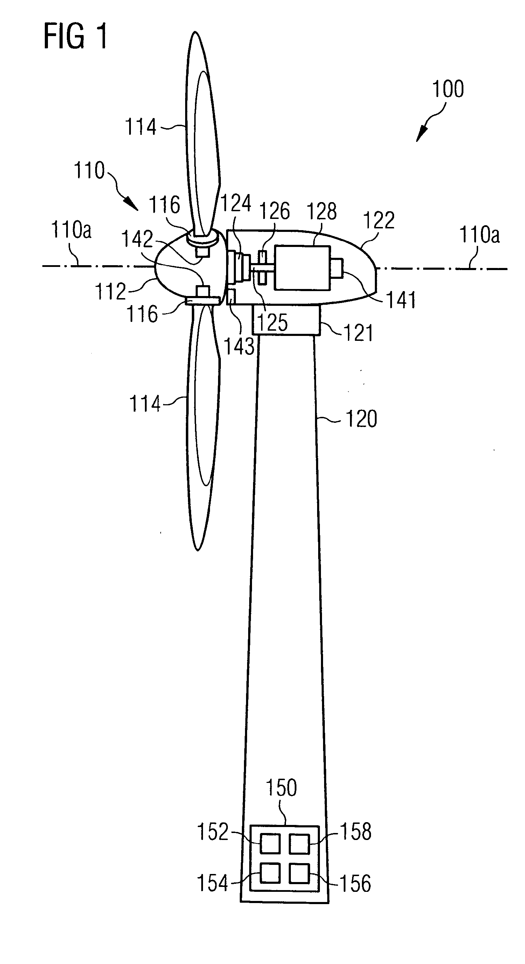

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment device 121, which is capable of rotating the nacelle 122 around a non depicted vertical axis, which is aligned with the longitudinal extension of the tower 120. By controlling the yaw angle adjustment device 121 in an appropriate manner it can be made sure, that during a normal operation of the wind turbine 100 the nacelle 122 is always properly aligned with the current wind direction. However, as will be described below in more detail, the yaw angle adjustment device 121 can be used to adjust the yaw angle to a position, wherein the nacelle is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a driving collar 112, extend radial with respect to the rotational axis 110a.

In between the driving collar 112 and a blade 114 there is respectively provided a blade adjustment device 116 in order to adjust the blade pitch angle of each blade 114 by rotating the respective blade 114 around a non depicted axis being aligned parallel with the longitudinal extension of the blade 114. By controlling the blade adjustment device 116 the blade pitch angle of the respective blade 114 can be adjusted in such a manner that at least when the wind is not so strong a maximum wind power can be retrieved from the available wind power. However, as will be described below in more detail, the blade pitch angle can also be intentionally adjusted to a position, in which only a reduced wind power can be captured.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to a generator 128. Further, a brake 126 is provided in order to stop the operation of the wind turbine 100 for instance (a) in case of an emergency, (b) in case of too strong wind conditions, which might harm the wind turbine 100, and/or (c) in case of an intentional saving of structural fatigue life of at least one component of the wind turbine 100.

The wind turbine 100 further comprises a control system 150 for operating the wind turbine 100 in a highly efficient manner. Apart from controlling for instance the yaw angle adjustment device 121 the depicted control system 150 is also used for adjusting the blade pitch angle of the rotor blades 114 in an optimized manner. Further, as will be described below in more detail, the control system 150 is used for adjusting the yaw angle of the nacelle 122 respectively of the rotor 110.

For controlling the operation of the wind turbine the control system 150 is connected to a rotational speed sensor 143, which is connected to the gear box 124. The rotational speed sensor 143 feeds a signal to the control system 150, which is indicative for the current rotational speed of the rotor 110.

Further, the control system 150 is connected to a power sensor 141 being connected to the generator 128. The power sensor 141 provides information about the current power production of the wind turbine 110.

Furthermore, the control system 150 is connected to angle sensors 142, which, according to the embodiment described here, are connected to the respective blade adjustment device 116. Therefore, the control system 150 always has a precise knowledge about the actual blade pitch angle settings of all rotor blades 114.

According to the embodiment described here the control system 150 is also used for controlling the mechanical load of at least one structural component of the wind turbine. The structural component may be for instance the rotor blade 114, the tower 120 and/or the nacelle 122. Therefore, the control system can also be denominated a wind turbine load control system 150.

In order to perform a turbine load control the wind turbine load control system 150 comprises a receiving unit 152 for receiving a measurement value being indicative for a current mechanical load which is acting on a structural component 114, 120 or 122. Further, the wind turbine load control system 150 comprises an estimation unit for estimating a new accumulated fatigue life time consumption of the structural component 114, 120 or 122 based on the measured current mechanical load and based on a previously estimated accumulated fatigue life time consumption. Further, the wind turbine load control system 150 comprises a processing unit 156 for determining a set point for a fatigue life time consumption of the structural component 114, 120 or 122 based on the estimated new accumulated fatigue life time consumption and on at least one parameter being relevant for operating the wind turbine 100 in the future. Furthermore, the wind turbine load control system 150 comprises a control unit 158 for operating the wind turbine 100 in such a manner that the set point for the fatigue life time consumption of the structural component 114, 120 or 122 is achieved at least approximately.

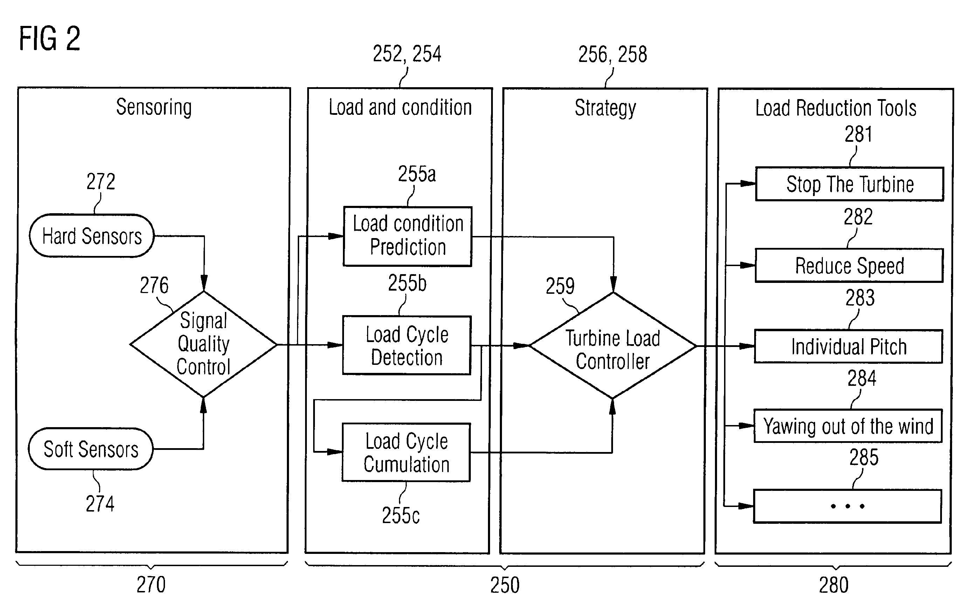

Figure 2 shows in accordance with an embodiment of the present invention a block diagram of a wind turbine load control system 250 and both an associated fatigue sensing system 270 and an associated executing system 280 for reducing the mechanical load acting on a structural component of the respective wind turbine.

The wind turbine operation control starts with measuring mechanical loads, which are acting on a structural component of the wind turbine. As has already been mentioned above, the structural component may be a rotor blade, the nacelle or the tower of the respective load controlled wind turbine.

The mechanical load measurement may be accomplished with hard sensors 272 such as for instance a force meter, a pressure gauge, a strain gauge (e.g. a tensometer), an acceleration sensor and/or a temperature sensor. Further, the mechanical load measurement may be accomplished with soft sensors 274. The signal quality of the sensor signals provided from the hard sensors 272 and/or from the soft sensors 274 is checked with a signal quality control unit 276. Thereby, measurement artifacts or apparent measuring errors can be filtered out.

The signal quality control unit 276 provides as an output signal a positively adjudged measurement signal being indicative for the current mechanical load acting on the respective structural component. The output signal is fed to a receiving and estimating unit 252, 254 of the wind turbine load control system 250. The receiving and estimating unit 252, 254 comprises a load condition prediction unit 255a, a load cycle detection unit 255b and a load cycle cumulation unit 255c. As can be seen from Figure 2, according to the embodiment described here, the output signal of the signal quality control unit 276 is provided both to the load condition prediction unit 255a and to the load cycle detection unit 255b.

The load condition prediction unit 255a predicts the mechanical load condition of the respective structural component and feeds a corresponding signal to a processing and control unit 256, 258. According to the embodiment described here the processing and control unit 256, 258 comprises a turbine load controller 259, which is receiving the mentioned signal from the load condition prediction unit 255a.

The load cycle detection unit 255b detects and evaluates the load cycle which is currently acting on the respective structural component and feeds a corresponding signal both to the turbine load controller 259 and to the above mentioned load cycle cumulation unit 255c. An output signal of the load cycle cumulation unit 255c, which is indicative for the accumulated fatigue life time consumption of the structural component is also fed to the turbine load controller 259.

Based on the three output signals provided (a) by the load condition prediction unit 255a, (b) by the load cycle detection unit 255b and (c) by the load cycle cumulation unit 255c the turbine load controller 259 dynamically adapts the set point for the fatigue life time consumption of the respective structural component. In response to this set point adaptation the wind turbine is operated in such a manner that the real fatigue life time consumption of the structural component approaches the set point at least approximately. In order to achieve this, an executing system 280 selects at least one load adaptation or load reduction tool.

A very aggressive load reduction tool is simply to stop the operation of the wind turbine. This is indicated with reference numeral 281. Further load reduction tools or load reduction measures are reducing the rotor speed (reference numeral 282), adapting the individual blade pitch angle (reference numeral 283) and/or adjusting the yawing angle (reference numeral 284). It is mentioned that the given list of load reduction tools is not exclusive. In order to reduce the current mechanical load acting on the structural component a suitable adaptation of any arbitrary parameter of the wind turbine may be carried out, wherein the parameter adaptation results in a change of the current power generation of the wind turbine. Therefore, reference numeral 285 indicates other not explicitly described load reduction tools.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for controlling the operation of a power generating machine (100), in particular for controlling the operation of a wind turbine (100), the method comprising
• measuring a current mechanical load which is acting on a structural component (114, 120, 122) of the power generating machine (100),
• estimating a new accumulated fatigue life time consumption of the structural component (114, 120, 122) based
- on the measured current mechanical load and
- on a previously estimated accumulated fatigue life time consumption,
• determining a set point for a fatigue life time consumption of the structural component (114, 120, 122) based
- on the estimated new accumulated fatigue life time consumption and
- on at least one parameter being relevant for operating the power generating machine (100) in the future and
• operating the power generating machine (100) in such a manner that the set point for the fatigue life time consumption of the structural component (114, 120, 122) is achieved at least approximately.

2. The method as set forth in the preceding claim, wherein the at least one parameter being relevant for operating the power generating machine (100) in the future is
- a scheduled fatigue life time consumption of the structural component (114, 120, 122),
- a current fatigue life time consumption of the structural component (114, 120, 122) being spent for generating a predefined amount of energy and/or
- a remaining fatigue life time of the structural component (114, 120, 122).

3. The method as set forth in any one of the preceding claims, wherein
the current mechanical load which is acting on the structural component (114, 120, 122) is measured by a hard sensor (272).

4. The method as set forth in any one of the preceding claims, wherein
the current mechanical load which is acting on the structural component (114, 120, 122) is measured by a soft sensor (274).

5. The method as set forth in any one of the preceding claims, wherein
the power generating machine is a wind turbine (100) and operating the power generating machine (100) in such a manner that the set point for the fatigue life time consumption of the structural component (114, 120, 122) is achieved at least approximately comprises at least one of the following control measures:
- stopping the operation of the wind turbine (100) for a predetermined period of time,
- reducing the speed of the wind turbine (100),
- reducing the power being generated by the wind turbine (100),
- changing the blade pitch angle of at least one rotor blade (114) of the wind turbine (100),
- changing the yaw angle of a nacelle (122) of the wind turbine (100).

6. A machine load control system (150, 250) for controlling the operation of a power generating machine (100), in particular for controlling the operation of a wind turbine (100), the machine load control system (150, 250) comprising
• a receiving unit (152) for receiving a measurement value being indicative for a current mechanical load which is acting on a structural component (114, 120, 122) of the power generating machine (100),
• an estimation unit (154) for estimating a new accumulated fatigue life time consumption of the structural component (114, 120, 122) based
- on the measured current mechanical load and
- on a previously estimated accumulated fatigue life time consumption,
• a processing unit (156) for determining a set point for a fatigue life time consumption of the structural component (114, 120, 122) based
- on the estimated new accumulated fatigue life time consumption and
- on at least one parameter being relevant for operating the power generating machine (100) in the future and
• a control unit (158) for operating the power generating machine (100) in such a manner that the set point for the fatigue life time consumption of the structural component (114, 120, 122) is achieved at least approximately.

7. A power generating machine comprising
• a machine load control system (150, 250) as set forth in the preceding claim.

8. A wind turbine comprising
• a machine load control system (150, 250) as set forth in claim 6.

9. The wind turbine as set forth in the preceding claim, wherein
the structural component is a force, a stress and/or a pressure receiving element of a wind turbine.

10. A computer program for controlling the operation of a power generating machine (100), in particular for controlling the operation of a wind turbine (100), the computer program, when being executed by a data processor, is adapted for controlling the method as set forth in any one of the claims 1 to 5.
